# FASCICULE DE BREVET EUROPEEN

(11) **EP 1 637 474 B1**
(45) Date de publication et mention de la délivrance du brevet: **30.04.2008**
(21) Numéro de dépôt: 05370027.4
(22) Date de dépôt: 15.09.2005
(51) Int. Cl.: B65F 1/00

(54) **Déchetterie transportable**
Transportable Mülldeponie
Transportable refuse dump

(30) Priorité: 15.09.2004 FR 0409760
(43) Date de publication de la demande: 22.03.2006
(73) Titulaire: Fregeac, Bruno, 62860 Epinoy (FR); Alglave, Francis, 59530 Villereau (FR)
(72) Inventeur: Fregeac, Bruno, 62860 Epinoy (FR); Alglave, Francis, 59530 Villereau (FR)
(74) Mandataire: Duthoit, Michel Georges André

(56) Documents cités:
- FR-A- 2 687 939
- FR-A- 2 706 791
- GB-A- 2 195 676

## Description

La présente invention concerne une déchetterie transportable.

Elle est essentiellement destinée à des collectivités ou des chantiers industriels et en règle générale là où le volume de déchets ou la pérennité d'apport des déchets ne justifie pas la mise en place d'une déchetterie fixe.

II existe actuellement des déchetterie fixes construites ou la densité de population est importante. Un tel dispositif comprend une rampe d'accès pour autoriser la circulation de véhicules sur une plate-forme qui débouche en regard de quais surmontant des conteneurs ou des bennes à l'intérieur desquels l'on jette ces ordures.

Elles présentent la même accessibilité que la présente invention, mais les usagers doivent parcourir parfois de longues distances pour en bénéficier, ce qui peut décourager et les déchets peuvent alors être abandonnés dans la nature.

De tels dispositifs présentent de nombreux inconvénients en pratique. En outre, en raison de leur réalisation en béton, ils constituent un site d'exploitation fixe dont le coût de fabrication est élevé. Par ailleurs, ils ne peuvent être réalisés que sur des sites adaptés permettant leur mise en place, ce qui en limite les possibilités d'exploitation. De plus la charge de tel dispositif n'est pas constante dans l'année, ils sont en sous charge durant la période hivernale et en surcharge durant la période estivale.

II existe également des déchetteries dites modulaires, c'est à dire qu'elles sont réalisées en éléments métalliques préfabriqués que l'on vient déposer sur l'aire de la déchetterie au moyen de camions benne ou autres. Ces déchetteries possèdent les mêmes inconvénients que les déchetteries fixes décrites plus haut et leur temps de mise en place est beaucoup plus long que la présente invention. Il nécessite la préparation de l'aire qui va recevoir ce dispositif, en effet la nature du sol doit être stable et homogène et la surface doit être plane. Le coût de ce dispositif reste élevé.

Un autre exemple d'une déchetterie modulaire est decrit dans le document FR-A-2 706 791.

Les déchetteries fixes ou modulaires ont pour but d'être acquises, les petites structures ne peuvent envisager cet investissement.

Les zones de faible densité de population bénéficient parfois de déchetteries dites "mobiles" mais il ne s'agit en fait que de conteneurs en nombre très limité posés à même le sol sans accès particulier ou équipés d'escalier mobile avec petite plate-forme d'accès. Les usagers doivent jeter leurs déchets par-dessus la benne, les risques de blessure (entorse, luxation, etc...) pour l'usager sont importants ou les risques de chute lors de l'accès aux bennes avec leurs déchets sur ces escaliers.

Les déchets peuvent également être jetés en dehors de la benne et restés au sol, l'environnement de tel déchetterie est généralement souillé après le passage des usagers.

Le système selon l'invention permet de remédier à ces inconvénients et d'obtenir un service de proximité pour les usagers désireux de se débarrasser des déchets non ramassés en porte à porte, en toute sécurité et de bénéficier ainsi de service habituellement exclusivement réservé aux agglomérations importantes ou d'un service d'appoint pour les collectivités possédant des déchetteries fixes saturées en période estivale en fournissant une plate-forme mobile de type semi-remorque circulant sur voies routières, possédant des quais surélevés déployables latéralement au voisinage desquels viendra se positionner des réceptacles pour recevoir notamment des déchets solides ou liquides, d'une conception très simple qui permet réellement son implantation quel que soit le site choisi.

L'invention concerne une déchetterie transportable se présentant sous la forme d'au moins une remorque, notamment de type semi-remorque, apte à circuler sur voie routière, la déchetterie comprenant une plate-forme définissant au moins un quai surélevé de déchargement de déchets dans au moins un réceptacle de stockage et/ou de récupération des déchets, et une voie de circulation de véhicules ou de piétons, comprenant au moins une rampe d'accès la plate-forme étant constituée, d'une part, d'un plateau, assujetti de manière fixe au châssis de la remorque, et d'autre part d'au moins un élément de quai mobile, la déchetterie présentant des moyens pour déplacer ledit au moins un élément de quai, d'une position de transport, où ledit élément de quai est escamoté horizontalement, sur le plateau, la plate-forme occupant une surface d'encombrement minimale, à une position d'utilisation, dans laquelle ledit au moins un élément de quai est déployé horizontalement et latéralement au-delà du plateau pour constituer le quai surélevé, la plate-forme occupant une surface sensiblement supérieure à celle du plateau.

L'invention concerne également un système de déchetterie composé d'un arrangement de déchetteries transportables qui sont reliées entre elles dans une configuration définissant une ou plusieurs voies de circulation pour des véhicules ou piétons avec des quais de déchargement au voisinage du(des)quel(s) se positionnent des réceptacles de stockage et de récupération de déchets posés au sol.

Les dessins annexés illustrent l'invention :
La figure 1 représente en vue de dessus, une déchetterie transportable conforme à l'invention, entièrement déployée.
La figure 2 représente en vue latérale, la déchetterie, transportable illustrée la figure 1.
La figure 3 représente en vue latérale, déchetterie transportable illustrée à la figure 1, repliée en configuration routière.
La figure 4 représente, selon des vues en coupe, le déploiement des éléments de quai dans ladite position d'utilisation en déchetterie.
La figure 5 représente en vue latérale, le déploiement de la rampe d'accès et de la plate-forme de pesage en charge.
La figure 6 représente en vue de face, le coffret de commande des vérins.

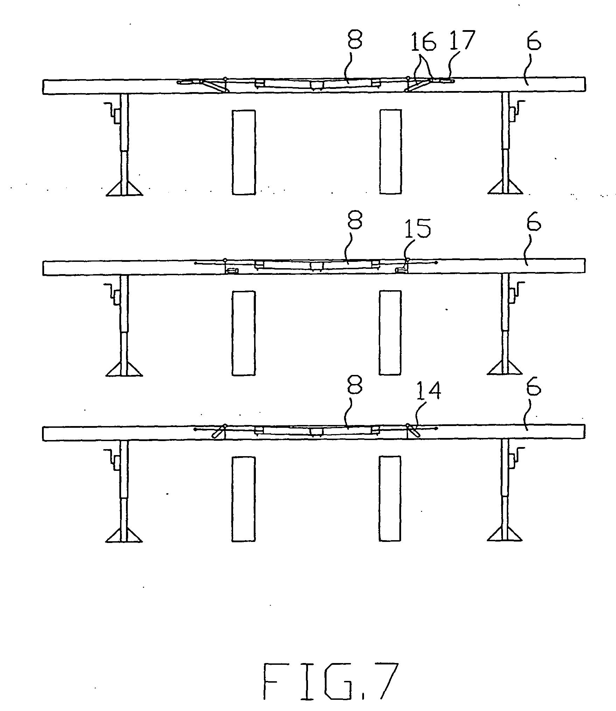

La figure 7 représente, selon des vues en coupe, des variantes de l'articulation des quais.
La figure 8 représente un système de déchetterie conforme à l'invention, composé d'un arrangement de déchetteries transportables.

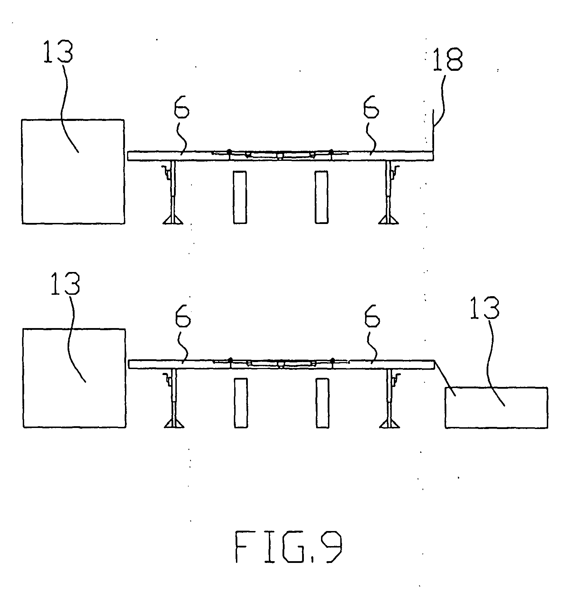

La figure 9 représente selon des vues en coupe, deux positions d'un garde corps pivotant.
La figure 10 représente en vue de dessus, une déchetterie transportable selon un mode avantageux de réalisation de l'invention.

L'invention concerne une déchetterie transportable (50) se présentant sous la forme d'au moins une remorque, notamment de type semi-remorque, apte à circuler sur voie routière.

Le déchetterie comprend une plate-forme définissant au moins un quai surélevé de déchargement de déchets dans au moins un réceptacle (13) de stockage et/ou de récupération des déchets. La plate-forme définit une voie de circulation de véhicules ou de piétons, comprenant au moins une rampe d'accès (3,4).

Selon l'invention, la plate-forme est constituée, d'une part, d'un plateau (2), assujetti de manière fixe au châssis de la remorque, et d'autre part, d'au moins un élément de quai (6, 6₁, 6₁₁) mobile.

La déchetterie présente, en outre, des moyens pour déplacer ledit au moins un élément de quai d'une position de transport de ladite déchetterie à une position d'utilisation.

Dans ladite position de transport, ledit élément de quai (6, 6₁, 6₁₁) est escamoté horizontalement, directement ou indirectement sur d'autres éléments, sur le plateau (2) de la remorque (20). Dans cette position, l'élément de quai occupe une surface d'encombrement minimale.

Dans ladite position d'utilisation, ledit au moins un élément de quai (6, 6₁, 6₁₁) est déployé horizontalement et latéralement au-delà du plateau (2) pour constituer le quai surélevé de déchargement. Dans cette position, l'élément de quai occupe une surface supérieure à celle du plateau (2).

Selon des exemples de réalisation particuliers :
- ledit au moins un quai surélevé de déchargement se déploie latéralement en s'étendant au-delà dudit plateau, au voisinage du(des)quel(s) se positionne au moins un réceptacle (13) de stockage et/ou de récupération de déchets posé au sol.
- ledit au moins un quai surélevé de déchargement se déploie latéralement en s'étendant au-delà dudit plateau en présentant une direction principale non parallèle par rapport à la direction principale de la plate-forme, au voisinage du(des)quel(s) se positionne au moins un réceptacle (13) de stockage et de récupération de déchets posé au sol
- la plate-forme comprend au moins un arrangement d'éléments de quai (6) surélevés de déchargement de forme sensiblement triangulaire, notamment triangle rectangle, formant des « épis » par rapport à la plate-forme au voisinage du(des)quel(s) se positionne respectivement un arrangement de réceptacles (13) de stockage et/ou de récupération de déchets posés au sol reprenant sensiblement ce positionnement en « épis » par rapport à la- plate-forme.
- la plate-forme comporte au moins un garde-corps (1) situé sur tout ou partie de la périphérie de la plate-forme et de(s) quai(s) (6).
- la plate-forme comporte au moins un garde-corps (1) situé sur tout ou partie de la périphérie de la plate-forme et de(s) quai(s) (6), excepté au droit des réceptacles (13) qui forment naturellement un garde-corps avec les quais (6), la hauteur de la plate-forme étant inférieure à la hauteur des réceptacles posés au sol.
- lesdits éléments de quai comprennent des moyens pour les déployer latéralement ou les replier, intérieurement sur la surface supérieure de ladite plate-forme, notamment par des moyens hydrauliques commandés.
- la plate-forme comprend des moyens de pesage des déchets associés ou non à un calculateur de gestion de pesage.
- la plate-forme comprend une cabine notamment pour gardien situé à proximité de la rampe d'accès (4) à la même hauteur que les quais (6) ou légèrement surélevée de façon à avoir une bonne vision de l'ensemble.
- la plate-forme comporte au moins un garde-corps pivotant (1) situé sur tout ou partie de la périphérie de la plate-forme et de(s) quai(s) (6), qui pivote en rotation sur le bord pour former un garde-corps en position relevée par rapport à au moins un réceptacle plus haut que la plate-forme et pour former en position abaissée un moyen de guidage des déchets reposant sur le bord du réceptacle moins haut que la plate-forme.

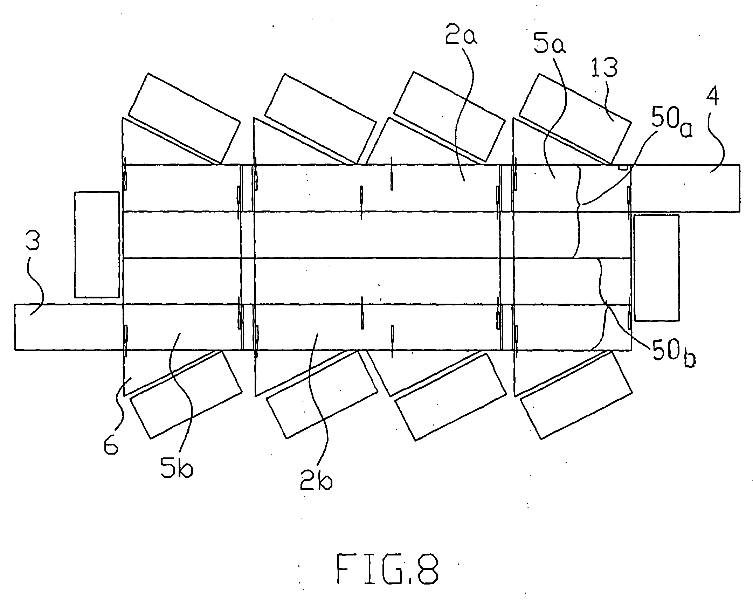

Selon un exemple de réalisation illustré à la figure 8, ledit au moins un élément de quai (6), notamment triangulaire peut être articulé directement au plateau (2) de la remorque (20), ou encore à un élément de pesage (5a, 5b) prolongeant la voie de circulation.

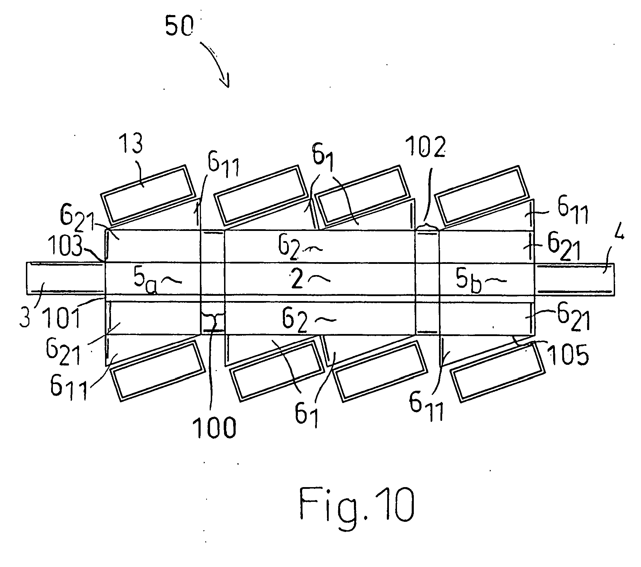

Selon une autre variante illustrée à la figure 10, la plate-forme présente, en outre, au moins élément intermédiaire (6₂,6₂₁) mobile, assujetti mécaniquement directement ou indirectement par l'intermédiaire d'autres éléments (5a,5b), d'une part au plateau (2) de la remorque et d'autre part audit élément de quai (6₁, 6₁₁), afin d'élargir la voie de circulation, ledit élément intermédiaire (6₂,6₂₁) étant apte à s'escamoter horizontalement sur le plateau (2) de la remorque (20) dans la position de transport.

Cette disposition permet avantageusement aux véhicules de se doubler sur la plate-forme, notamment lorsque l'un d'entre eux est au stationnement lors des opérations de déchargement des déchets.

Ladite au moins une rampe d'accès (3,4) peut être mobile, apte à s'escamoter horizontalement, directement ou indirectement sur le plateau (2) de la remorque (20) dans la position de transport.

Les éléments mobiles constituant la déchetterie, à savoir ledit élément de quai (6, 6₁, 6₁₁), et le cas échéant, la rampe d'accès (3,4) ou encore ledit élément intermédiaire (6₂, 6₂₁), peuvent être articulés pour venir se replier, directement ou indirectement, à l'encontre du plateau (2) de la remorque (20), par l'intermédiaire de charnière(s) (100, 101, 102, 103).

Avantageusement, la déchetterie peut présenter au moins une charnière (100, 101, 102) à deux axes d'articulation distants, permettant auxdits éléments mobiles de venir se replier horizontalement à l'encontre d'une épaisseur d'élément(s) escamoté(s) sur le plateau.

Selon, une autre variante, les éléments mobiles constituant la déchetterie, à savoir ledit élément de quai (6, 6₁, 6₁₁), et le cas échéant, la rampe d'accès (3, 4) ou encore ledit élément intermédiaire (6₂, 6₂₁), sont articulés par coulissement, permettant audits éléments mobiles de venir s'escamoter sur le plateau.

La déchetterie présente, selon une variante, au moins un arrangement d'éléments de quai (6, 6₁, 6₁₁) triangulaires, formant des épis, au voisinage desquels se positionne respectivement un arrangement de réceptacles (13) de stockage/ ou de récupération de déchets, posés au sol suivant les épis.

Les éléments mobiles constituant la déchetterie, à savoir ledit élément de quai (6, 6₁, 6₁₁), et le cas échéant, la rampe d'accès (3, 4) ou encore ledit élément intermédiaire (6₂, 6₂₁), peuvent être actionnés au déplacement par vérin(s) hydraulique(s).

Avantageusement, la plate-forme peut comporter au moins un garde corps (1) situé sur tout ou partie de sa périphérie. Selon une variante le garde corps (1) fait le pourtour de la plate-forme, excepté au droit des réceptacles (13) qui forment naturellement un garde corps avec les éléments de quai avec l'une de leurs parois verticales, notamment lorsque la hauteur de la plate-forme est inférieure à celle des réceptacles (13).

Le garde corps peut être également prévu pivotant, notamment constitué par une paroi (18) escamotable d'une position verticale, où elle constitue le garde corps à une position inclinée de guidage des déchets où ladite paroi vient reposer en appui contre le bords d'un réceptacle (13) de stockage/ de récupération, disposé sous le niveau de la plate-forme.

En référence aux dessins, le système est constitué d'un châssis de semi-remorque (20) sur lequel se replie par moyens hydrauliques (7) et (8) les différents éléments constituant la plate-forme de la déchetterie transportable (3)(4)(5)(6).

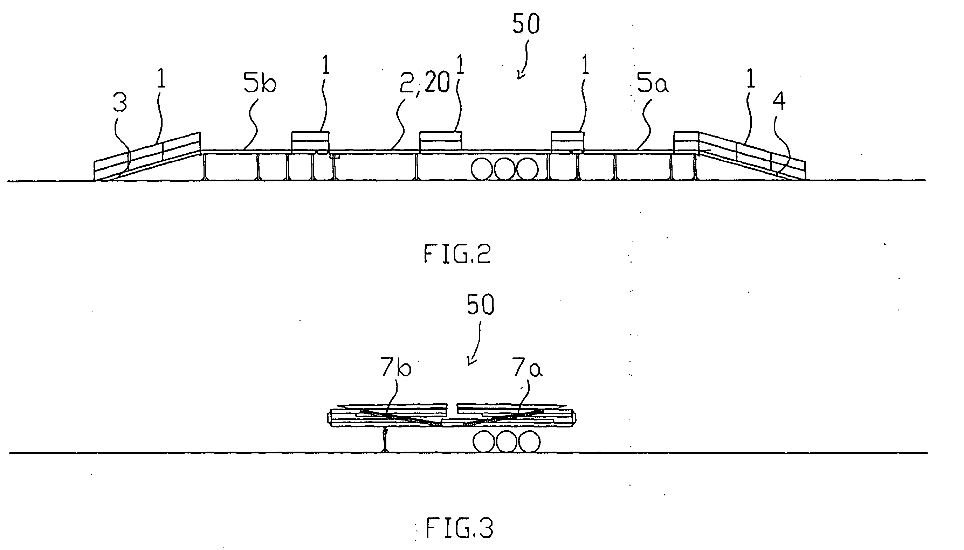

En position repliée (fig.3) le système peut être attelé à un tracteur routier (non représenté sur les dessins) et circuler sur route, il est équipé de tout ce que la réglementation impose au regard de la circulation routière.

II est amené à pied d'oeuvre par ce tracteur. Le système est alors dételé du tracteur.

Le groupe hydraulique du tracteur fournit l'énergie nécessaire à la mise en place de la déchetterie.

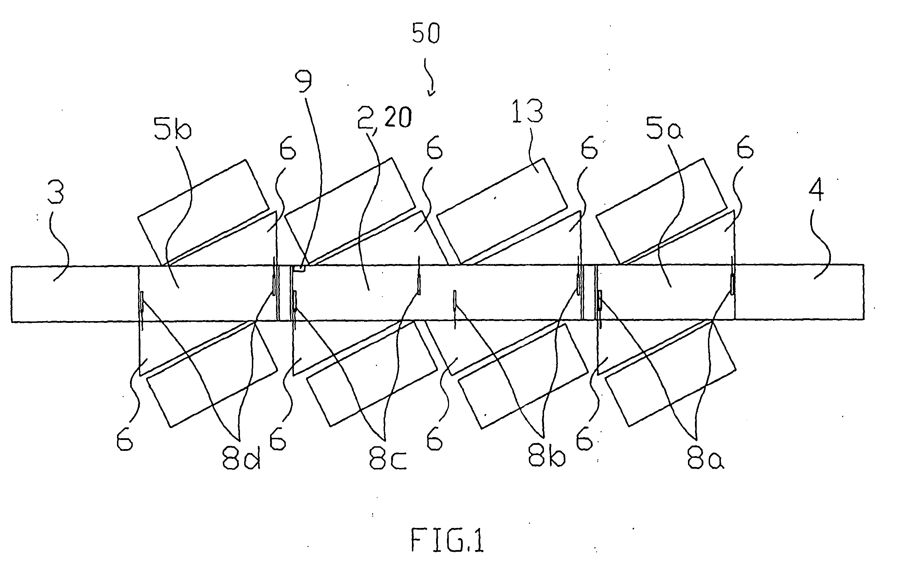

Des raccords rapides équipent le système pour le raccorder au tracteur. Ces raccords sont situés sur le boîtier de distribution hydraulique (9)(fig.1).

Chaque paire de vérins doubles effets (7a)(7b)(8a)(8b)(8c) (8d) est commandée par une électrovanne à commande manuelle. Ces électrovannes sont situées sur le panneau de commande (9) placé sur le coté latéral du châssis (2).

Chaque électrovanne à commande manuelle comporte 3 positions, la position centrale-0 met les deux cotés du vérin en communication et à la bâche, la position 1 sort les vérins, la position 2 les rentre.

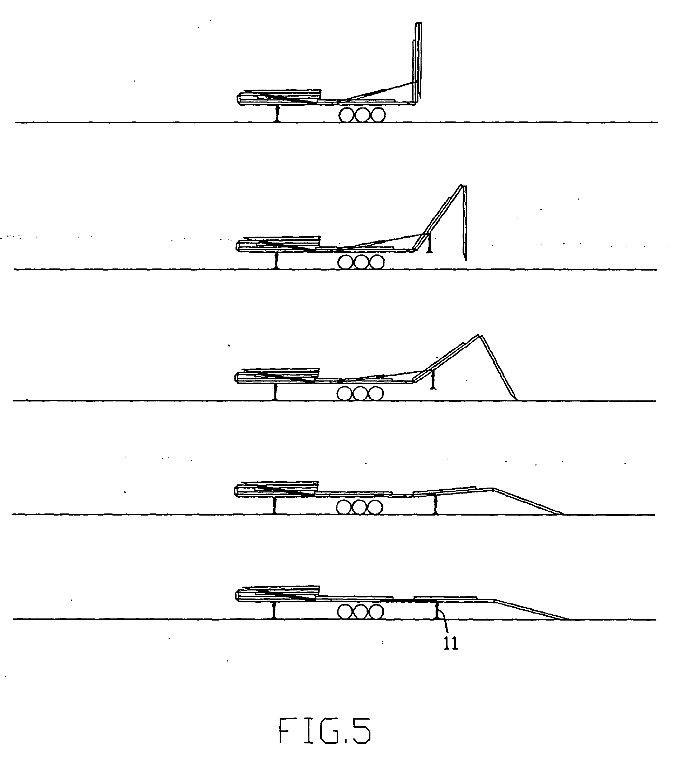

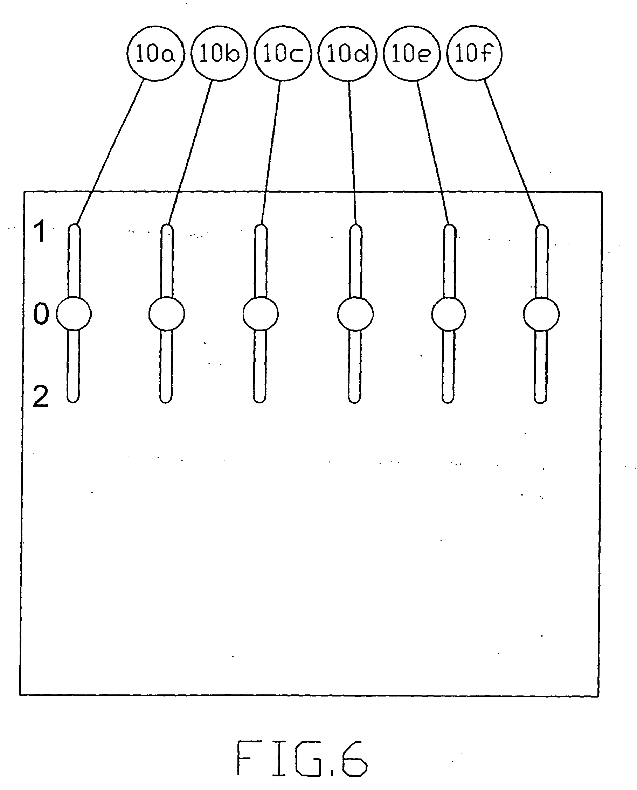

La mise en place de la rampe de montée (4) et de la plate-forme de pesage (5a) des véhicules légers (fig.1 et fig.5) au moyen des vérins (7a) est effectuée en manoeuvrant l'électrovanne (10a) vers la position 1 (fig.6). Il y a deux vérins (7a), un de chaque coté du châssis (2).

La structure se déploie jusqu'au moment où le pied (11) vient toucher le sol (Fig.5). La pression des vérins (7a) est alors relâchée. Le levier de commande de l'électrovanne (10a) est ramené en position centrale 0.

Le pied (11) est réglable en hauteur au moyen d'une manivelle manoeuvrée manuellement. La fin de la mise en place de la rampe d'accès est réalisée en descendant le pied (11) au moyen de la manivelle.

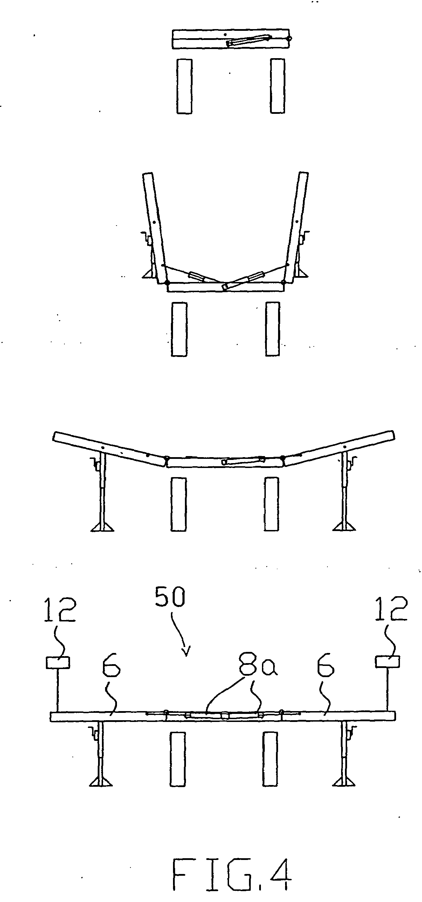

Le vérin ne peut assurer seul la mise en place car son axe passe par le centre de rotation de la structure en fin de manoeuvre (Fig.4)

Remarque: Le pied (11) s'escamote complètement dans la structure lorsque celle-ci est repliée (Fig.3)

La même manoeuvre est répétée pour déplier le quai (5b) et la rampe (3) au moyen des vérins (7b).

Les quais d'accès aux bennes (6) sont ensuite dépliés à leur tour, deux par deux en vis à vis.

La mise en place de la première paire de quais en vis à vis (6) (fig.1 et fig.4) est réalisée au moyen des vérins (8a) en manoeuvrant l'électrovanne (10c) vers la position 1 (fig.6). Il y a deux vérins (8a), un à chaque bout du quai (5a).

Les deux quais se déploient jusqu'au moment où le pied (11) vient toucher le sol (Fig.4). La pression des vérins (8a) est alors relâchée. Le levier de commande de l'électrovanne (10c) est ramené en position centrale 0.

Le pied (11) est réglable en hauteur au moyen d'une manivelle manoeuvrée manuellement. La fin de la mise en place du quai est réalisée en descendant le pied (11) au moyen de la manivelle.

Les vérins (8a) ne peuvent assurer seuls la mise en place car leur axe passe par le centre de rotation des quais en fin de manoeuvre (Fig.4)

Remarque: Le pied (11) s'escamote complètement dans la structure lorsque celle-ci est repliée (Fig.4)

Les mêmes manoeuvres sont répétées pour déplier les autres quais (6) au moyen des paires de vérins (8b)(8c)(8d).

Des gardes corps (1) (fig.2) sont placés manuellement dans des logements prévus à cet effet sur le pourtour de la plate-forme et empêche toute chute accidentelle de la plate-forme.

Des pancartes (12)(fig.4) indiquant la nature des déchets à déposer, qui étaient rangés et accrochés à l'intérieur des quais dans le système replié, sont placées manuellement dans des logements prévus à cet effet dans l'angle des quais opposé aux vérins (8).

Les bennes (13) sont alors déposées en pourtour du système, le long des quais (6).

Aux droits des bennes il n'y a pas de garde-corps afin d'accéder aux bennes. La benne est plus haute que la plate-forme d'environ un mètre, elle forme ainsi naturellement un garde corps (fig.2) et protège l'usager contre toute chute accidentelle dans la benne.

Les usagers ont accès sur la plate-forme via la rampe (4), et aux différents quais d'accès (6) aux bennes.

Les véhicules accèdent au système par la rampe d'accès (4), un léger arrêt en haut de cette rampe sur la partie horizontale équipée de pesons (5a) permet un pesage en charge du véhicule. Le véhicule continue alors d'avancer jusqu'au quai (6) correspondant au déchet dont il désire se débarrasser. L'usager quitte alors son véhicule pour jeter ses déchets manuellement dans la ou les bennes correspondantes. Il remonte ensuite dans son véhicule et se dirige vers le quai de descente (3), il s'arrête de nouveau juste avant la rampe (3) sur la plate-forme équipée de pesons (5b) pour être pesé à vide. Le poids de déchets déposés est alors connu de façon exacte.

Un logiciel peut être couplé à la pesée pour enregistrer le poids, la nature du déchet déposé, la date, le numéro d'immatriculation du véhicule ayant déposé le déchet, le-nom de l'usager, l'adresse de l'usager, cette liste d'enregistrements n'est donnée qu'à titre indicative et n'est pas exhaustive.

Ces enregistrements peuvent être utiles aux élus pour une facturation éventuelle, cerner de manière précise le type de déchet que leurs concitoyens génèrent, abaisser les coûts d'élimination par une meilleure maîtrise des filières de valorisation.

Le reploiement du système suit les mêmes consignes que décrites ci-dessus mais en ordre inverse et en remplaçant 2 par 1, concernant les manoeuvres du coffret de commande (9) des vérins.

Le système peut être loué pour une période donnée (même très courte), les petites structures non donc pas à supporter un investissement lourd.

Le système selon l'invention circule sur voies routières, il est tracté par un camion tracteur (appelé dans la suite du texte tracteur) et amené sur une aire plane (mais non spécifiquement aménagé) à l'endroit désiré très rapidement.

Selon un mode préféré de l'invention, le système est alors déplié très vite au moyen de vérins actionnés par le groupe hydraulique du tracteur. Les rampes d'accès et de descente sont dépliées en premier lieu puis les huit quais en épis sont ensuite dépliés par paire les uns après les autres.

Des pieds escamotables et réglables au moyen d'une manivelle permettent d'ajuster le système au terrain.

L'ensemble de la plate-forme est recouvert d'une structure alvéolaire de type caillebotis pour éviter les chutes de plein pied et les dérapages de véhicule.

Des garde-corps, qui étaient rangés dans le système replié, sont ensuite placés manuellement dans des logements prévus à cet effet en pourtour du système, sauf aux emplacement des bennes.

Des pancartes indiquant la nature des déchets à déposer, qui étaient rangées dans le système replié, sont placées manuellement dans des logements prévus à cet effet dans un angle-des quais correspondants.

Le système constitue alors une déchetterie avec une rampe d'accès, huit quais d'accès aux bennes, une rampe de descente, des protections périphériques et un système de pesé.

Des bennes à déchets sont alors déposées le long des quais.

Les véhicules accèdent au système par la rampe d'accès, un léger arrêt en haut de cette rampe sur la partie horizontale permet un pesage en charge du véhicule. Le véhicule continue alors d'avancer jusqu'au quai correspondant au déchet dont l'usager désire se débarrasser. L'usager quitte alors son véhicule pour jeter ses déchets dans la ou les bennes correspondantes. II remonte ensuite dans son véhicule et se dirige vers le quai de descente, il s'arrête de nouveau juste avant la rampe pour être pesé à vide. Le poids de déchets déposés est alors connu de façon exacte. L'usager quitte le système par la rampe de descente situé à l'opposé de la rampe d'accès. La circulation sur le système est à sens unique pour éviter tout accident.

Le système peut être très rapidement replié et déplacé ce qui en fait sa grande originalité.

Selon des exemples particuliers de réalisation :
- les quais d'accès aux bennes peuvent avoir des formes différentes (triangulaire ou rectangulaire) afin d'obtenir des agencements différents des quais.
- les vérins peuvent être remplacés par des systèmes à treuil électrique ou manuel ou par tout autre système permettant la rotation des quais.
- les vérins peuvent être supprimés et l'ouverture des quais peut se faire au moyen d'un portique situé sur le tracteur.
- les quais peuvent être mis en place par translation et non plus par rotation au moyen de vérins ou de tout autre système permettant une translation
- les garde-corps peuvent être articulés et relevés manuellement ou par vérins ou tout autre moyen permettant leur rotation.
- les pancartes indiquant la nature des déchets à déposer par quai peuvent être articulées et relevées manuellement ou par vérins ou tout autre moyen permettant leur rotation.
- les pieds escamotables peuvent être réglés hydrauliquement au moyen de vérins situés sur ces pieds.
- un groupe hydraulique peut être embarqué sur le système pour rendre le système autonome, ce groupe peut être alimenté par un groupe électrogène qui peut être embarqué également ou par un branchement à une source électrique située à proximité de l'aire de déploiement du système.
- L'articulation des rampes et des quais peut être réalisée différemment que par une simple rotation autour d'un axe. Cette articulation peut se faire au moyen d'une translation oblique et d'une rotation afin que les mouvements de déploiement soient réalisés entièrement par les vérins sans l'aide des pieds réglables escamotables.
- des petits vérins supplémentaires situés sur le châssis peuvent être ajoutés pour venir pousser les quais afin de les décoller pour que les axes des vérins principaux de relevage des quais passent au-dessus de l'axe de rotation des quais et ainsi réalisés le mouvement des quais sans l'aide des pieds réglables escamotables
- un système de biellettes peut être ajouté en bout de tige des vérins de manoeuvre des quais afin que les mouvements de déploiement des quais soient réalisés entièrement par les vérins sans l'aide des pieds réglables escamotables
- Un éclairage des quais peut être ajouté alimenté soit par un groupe électrogène soit par une source électrique située à proximité de l'aire de déploiement du système.
- Le système peut être dépourvu de système de pesage
- Le système de pesage peut être couplé avec un logiciel de pesage.
- Des roulettes ou tout autre système ayant la même fonction, peuvent être ajoutées en bout des rampes d'accès et de descente pour faciliter leur déploiement au moment où le bout touche le sol.
- Les commandes des électrovannes peuvent être électriques.
- Une cabine pour le gardien peut être ajoutée à proximité de la rampe d'accès à la même hauteur que les quais ou légèrement surélevé de façon à avoir une bonne vision de l'ensemble du système.
- Le nombre de quais peut être réduit ou augmenté selon les besoins.

L'invention concerne également, tel qu'illustré à la figure 8, un système de déchetterie, composé d'un arrangement de déchetteries transportables (50a, 50b) reliées en elles dans une configuration définissant une ou plusieurs voies de circulation pour des véhicules ou piétons avec des quais de déchargement au voisinage du(des)quel(s) se positionnent des réceptacles de stockage et de récupérations de déchets (13) posés au sol.

Le système est particulièrement destiné aux communes et collectivités locales qui ne disposent pas des moyens nécessaires ou n'ont pas le nombre d'habitants suffisant pour construire une déchetterie fixe et aux collectivités en appoint de leurs déchetteries fixes en période estivale ou de travaux dans l'une d'elles.

## Revendications

1. Déchetterie transportable (50) se présentant sous la forme d'au moins une remorque (20), notamment de type semi-remorque, apte à circuler sur voie routière, la déchetterie (50) comprenant une plate-forme définissant au moins un quai surélevé de déchargement de déchets dans au moins un réceptacle (13) de stockage et/ou de récupération des déchets, et une voie de circulation de véhicules ou de piétons, comprenant au moins une rampe d'accès (3,4), la plate-forme étant constituée, d'une part, d'un plateau (2), assujetti de manière fixe au châssis de la remorque, et d'autre part d'au moins un élément de quai mobile (6, 6₁, 6₁₁), la déchetterie (50) présentant des moyens pour déplacer ledit au moins un élément de quai mobile (6, 6₁, 6₁₁), d'une position de transport, où ledit élément de quai mobile (6, 6₁, 6₁₁) est escamoté horizontalement, sur le plateau (2), la plate-forme occupant une surface d'encombrement minimale, à une position d'utilisation, dans laquelle ledit au moins un élément de quai mobile (6, 6₁, 6₁₁) est déployé horizontalement et latéralement au-delà du plateau (2) pour constituer le quai surélevé, la plate-forme occupant une surface supérieure à celle du plateau (2).

2. Déchetterie selon la revendication 1, dans laquelle la plate-forme présente, en outre, au moins un élément intermédiaire (6₂, 6₂₁) mobile, assujetti mécaniquement directement ou indirectement par l'intermédiaire d'autres éléments (5a,5b), d'une part au plateau (2) de la remorque (20) et d'autre part audit élément de quai mobile (6₁, 6₁₁), afin d'élargir la voie de circulation, ledit élément intermédiaire étant apte à s'escamoter horizontalement sur le plateau (2) de la remorque (20) dans la position de transport.

3. Déchetterie (50) selon la revendication 1 ou 2 dans laquelle ladite au moins une rampe d'accès (3,4) est mobile, apte à s'escamoter horizontalement directement ou indirectement sur le plateau (2) de la remorque (20) dans la position de transport.

4. Déchetterie (50) selon l'une des revendications 1 à 3, dans laquelle les éléments mobiles constituant la déchetterie (50), à savoir ledit élément de quai mobile (6, 6₁, 6₁₁), et le cas échéant, la rampe d'accès (3,4) ou encore ledit élément intermédiaire (6₂, 6₂₁), sont articulés pour venir se replier, directement ou indirectement, à l'encontre du plateau (2) de la remorque (20), par l'intermédiaire de charnière(s) (100, 101, 102, 103).

5. Déchetterie (50) selon la revendication 4 dans laquelle la déchetterie (50) présente au moins une charnière (100, 101, 102) à deux axes d'articulation distants, permettant auxdits éléments mobiles de venir se replier horizontalement à l'encontre d'une épaisseur d'élément(s) escamoté(s) sur le plateau (2).

6. Déchetterie (50) selon l'une des revendication 1 à 3, dans laquelle les éléments mobiles constituant la déchetterie (50), à savoir ledit élément de quai mobile (6, 6₁, 6₁₁), et le cas échéant, la rampe d'accès (3, 4) ou encore ledit élément intermédiaire (6₂, 6₂₁), sont articulés par coulissement, permettant audits éléments mobiles de venir s'escamoter sur le plateau.

7. Déchetterie (50) selon l'une des revendications 1 à 6, dans laquelle la déchetterie (50) présente au moins un arrangement d'éléments de quai mobile (6, 6₁, 6₁₁) triangulaires, formant des épis, au voisinage desquels se positionne respectivement un arrangement de réceptacles (13) de stockage/ ou de récupération de déchets, posés au sol suivant les épis.

8. Déchetterie (50) selon l'une des revendication 1 à 7 dans laquelle les éléments mobiles constituant la déchetterie (50), à savoir ledit élément de quai mobile (6, 6₁, 6₁₁), et le cas échéant, la rampe d'accès (3, 4) ou encore ledit élément intermédiaire (6₂, 6₂₁), sont actionnés au déplacement par vérin(s) hydraulique(s).

9. Déchetterie (50) selon l'une des revendications 1 à 8, dans laquelle la plate-forme comporte au moins un garde corps (1) situé sur tout ou partie de sa périphérie.

10. Déchetterie (50) selon l'une des revendications 1 à 9, dans laquelle la plate-forme présente, en outre, une paroi (18) escamotable d'une position verticale, où elle constitue un garde corps (1) à une position inclinée de guidage des déchets où ladite paroi vient reposer en appui contre le bords d'un réceptacle (13) de stockage/ de récupération, disposé sous le niveau de la plate-forme.

11. Système de déchetterie composé d'un arrangement de déchetteries transportables (50a, 50b) selon l'une quelconque des revendications précédentes, qui sont reliées entre elles dans une configuration définissant une ou plusieurs voies de circulation pour des véhicules ou piétons avec des quais de déchargement au voisinage du(des)quel(s) se positionnent des réceptacles de stockage et de récupération de déchets (13) posés au sol.

## Claims

1. A movable waste reception centre (50) having the shape of at least a trailer (80), more particularly of the semi-trailer type, capable of driving on a traffic lane, said waste reception centre (50) comprising a raised area defining at least a stilted platform for unloading waste into at least one waste storage and collection container (13) and a traffic lane for vehicles or pedestrians, comprising at least an access ramp (3, 4), the raised area being constituted, on the one hand, of a trailer platform (2) fixedly attached to the trailer chassis and, on the other hand, of at least a mobile platform element (6, 6₁, 6₁₁), the waste reception centre (50) having means for moving said at least one platform element (6, 6₁, 6₁₁) from a transport position where said platform element is horizontally retracted onto the trailer platform (2), said raised area occupying minimum overall dimensions, to an operating position, wherein at least one mobile platform element (6, 6₁, 6₁₁) is horizontally and laterally unfolded beyond the trailer platform (2) to build up the stilted platform, with the raised area occupying a surface bigger than that of the trailer platform (2).

2. A waste reception centre (50) according to claim 1, wherein the raised area further has at least one mobile intermediate element (6₂, 6₂₁), mechanically attached, directly or indirectly by means of other elements (5a, 5b), on the one hand to the trailer platform (2) of the trailer (20) and on the other hand to said mobile platform element (6, 6₁, 6₁₁), in order to widen the traffic lane, said intermediate element being capable of horizontally retracting onto the trailer platform (2) of the trailer (20) in the transport position.

3. A waste reception centre (50) according to one of claims 1 or 2, wherein said at least one access ramp (3, 4) is movable and capable of directly or indirectly retracting horizontally onto the trailer platform (2) of the trailer (20) in the transport position.

4. A waste reception centre (50) according to one of claims 1 to 3, wherein the mobile elements constituting the waste reception centre (50), i.e. said mobile platform element (6, 6₁, 6₁₁), and the access ramp (3, 4) or said intermediate element (6₂, 6₂₁), if any, are hinged to retract directly or indirectly against the trailer platform (2) of the trailer (20) by means of hinges (100, 101, 102, 103).

5. A waste reception centre (50) according to claim 4, wherein the waste reception centre (50) has at least one hinge (100; 101, 102) having two distant hinge lines, enabling said mobile elements to fold horizontally against the thickness of element(s) retracted onto the trailer platform (2).

6. A waste reception centre (50) according to one of claims 1 to 3, wherein the mobile elements constituting the waste reception centre (50), i.e. said mobile platform element (6, 6₁, 6₁₁), and the access ramp (3, 4) or said intermediate element (6₂, 6₂₁), if any, are slidingly articulated, thus enabling said mobile elements to retract onto the trailer platform

7. A waste reception centre (50) according to one of claims 1 to 6, wherein the waste reception centre (50) has at least one arrangement of triangular mobile platform elements (6, 6₁, 6₁₁), forming angles, in the vicinity of which is respectively positioned an arrangement of waste storage and collection containers (13) positioned on the ground, according to the angles.

8. A waste reception centre (50) according to one of claims 1 to 7, wherein the mobile elements constituting the waste reception centre (50), i.e. said mobile platform element (6, 6₁, 6₁₁), and the access ramp (3, 4) or said intermediate element (6₂, 6₂₁), if any, are actuated in motion by a hydraulic jack/hydraulic jacks.

9. A waste reception centre (50) according to one of claims 1 to 8, wherein the raised area includes at least one guard (1) positioned along all or part of its periphery.

10. A waste reception centre (50) according to one of claims 1 to 9, wherein the raised area further has a wall (18) retractable from a vertical position, where it serves as a guard (1), to a waste guiding reclined position, where said wall comes to rest against the edge of a storage and collection container (13) positioned below the trailer platform level.

11. A waste reception system composed of an arrangement of movable waste collection units (50a, 50b) according to any one of the preceding claims, which are connected together in a configuration defining one or several traffic lanes for vehicles or pedestrians, with unloading platforms in the vicinity of which waste storage and collection containers (13) are positioned on the ground.

## Patentansprüche

1. Transportierbare Müllverwertungsanlage (50), die als zumindest ein Anhänger (20) insbesondere der Art Sattelanhänger ausgestaltet ist, geeignet, um auf dem Straßenweg zu verkehren, wobei die Müllverwertungsanlage (50) eine Plattform, die zumindest eine Hochladerampe zum Abladen der Abfälle in zumindest einen Behälter (13) zur Lagerung und/oder zur Rückgewinnung von Abfällen bildet, und eine Fahrspur für Fahrzeuge oder für Fußgänger, die zumindest eine Zufahrtsrampe (3, 4) umfasst, umfasst, wobei die Plattform, einerseits, durch eine Platte (2), die auf unbewegliche Art und Wiese an dem Fahrgestell des Anhängers befestigt ist, und, andererseits, durch zumindest ein bewegliches Laderampebauteil (6, 6₁, 6₁₁) gebildet sei, wobei die Müllverwertungsanlage (50) Mittel aufweist, um das besagte, zumindest ein bewegliches Laderampebauteil (6, 6₁, 6₁₁) von einer Transportposition, in der das besagte bewegliche Laderampebauteil (6, 6₁, 6₁₁) waagerecht eingezogen ist, auf die Platte (2) zu rücken, wobei die Plattform einen minimalen Platzbedarf in einer Benutzungsposition einnimmt, in der das besagte, zumindest ein bewegliches Laderampebauteil (6, 6₁, 6₁₁) waagerecht und längsseitig über die Platte (2) hinaus entfaltet ist, um die Hochladerampe zu bilden, wobei die Plattform eine größere Oberfläche als jene der Platte (2) einnimmt.

2. Müllverwertungsanlage (50) nach Anspruch 1, bei der die Plattform außerdem zumindest ein bewegliches Zwischenbauteil (6₂, 6₂₁) aufweist, das mechanisch unmittelbar oder mittelbar durch andere bewegliche Bauteile (5a 5b), einerseits, an der Platte (2) des Anhängers (20), und, andererseits, an dem besagten beweglichen Laderampebauteil (6₁ 6₁₁) befestigt ist, um die Fahrspur zu erweitern, wobei das besagte Zwischenbauteil geeignet sei, um sich waagerecht auf der Platte (2) des Anhängers (20) in der Transportposition einzuziehen.

3. Müllverwertungsanlage (50) nach Anspruch 1 oder 2, bei der die besagte zumindest eine Zufahrtsrampe (3, 4) beweglich ist, geeignet, um sich waagerecht unmittelbar oder mittelbar auf der Platte (2) des Anhängers (20) in der Transportposition einzuziehen.

4. Müllverwertungsanlage (50) nach einem der Ansprüche 1 bis 3, bei der die beweglichen Bauteile, die die Müllverwertungsanlage (50), nämlich das besagte bewegliche Laderampebauteil (6, 6₁, 6₁₁) und gegebenenfalls die Zufahrtsrampe (3, 4) oder noch das besagte Zwischenbauteil (6₂, 6₂₁), bilden, gelenkig sind, um sich unmittelbar oder mittelbar gegen die Platte (2) des Anhängers (20) mittels eines Scharniergelenks bzw. Scharniergelenke (100, 101, 102, 103) umzuklappen.

5. Müllverwertungsanlage (50) nach Anspruch 4, bei der die Müllverwertungsanlage (50) zumindest ein Scharniergelenk (100, 101, 102) mit zwei beabstandeten Gelenkachsen aufweist, das den besagten beweglichen Bauteilen erlaubt, sich waagerecht gegen einer Überdicke aus einem bzw. mehreren auf der Platte (2) eingezogenen Bauteilen umzuklappen.

6. Müllverwertungsanlage (50) nach einem der Ansprüche 1 bis 3, bei der die beweglichen Bauteile, die die Müllverwertungsanlage (50), nämlich das besagte bewegliche Laderampebauteil (6, 6₁, 6₁₁) und gegebenenfalls die Zufahrtsrampe (3, 4) oder noch das besagte Zwischenbauteil (6₂, 6₂₁), bilden, durch Einschubführung gelenkig sind, wobei sie den besagten beweglichen Bauteilen erlauben, sich auf der Platte einzuziehen.

7. Müllverwertungsanlage (50) nach einem der Ansprüche 1 bis 6, bei der die Müllverwertungsanlage (50) zumindest eine Anordnung aus dreieckigen, beweglichen Laderampenteilen (6, 6₁, 6₁₁) aufweist, die Bühnen bilden, in deren Nähe sich eine Anordnung von Behältern (13) zur Lagerung bzw. zur Rückgewinnung von Abfällen positioniert, die den Bühnen nach auf dem Boden ruhen.

8. Müllverwertungsanlage (50) nach einem der Ansprüche 1 bis 7, bei der die beweglichen Bauteile, die die Müllverwertungsanlage (50), nämlich das besagte bewegliche Laderampebauteil (6, 6₁, 6₁₁) und gegebenenfalls die Zufahrtsrampe (3, 4) oder noch das besagte Zwischenbauteil (6₂, 6₂₁), bilden, durch einen bzw. mehrere hydraulische Arbeitszylinder in Bewegung gesetzt sind.

9. Müllverwertungsanlage (50) nach einem der Ansprüche 1 bis 8, bei der die Plattform zumindest eine Brüstung (1) umfasst, die auf ihrem ganzen Umkreis oder nur auf einem Teil ihres Umkreises befindlich ist.

10. Müllverwertungsanlage (50) nach einem der Ansprüche 1 bis 9, bei der die Plattform außerdem eine Wand (18) aufweist, die aus einer senkrechten Position, in der sie eine Brüstung (1) bildet, in eine geneigte Position zum Lenken der Abfälle einziehbar ist, in der die besagte Wand abstützend gegen die Ränder eines Behälters (13) zur Lagerung / zur Rückgewinnung ruht, der unter dem Bereich der Plattform befindlich ist.

11. Müllverwertungsanlagesystem, bestehend aus einer Anordnung transportierbarer Müllverwertungsanlagen (50a, 50b) nach irgendeinem der vorgehenden Ansprüche, die miteinander gemäß einer Konfiguration verbunden sind, die eine oder mehrere Fahrspuren mit Abladerampen für Fahrzeuge oder für Fußgänger definiert, in der Nähe von welcher bzw. von welchen sich Behälter zur Lagerung und zur Rückgewinnung von Abfällen (13) positionieren, die auf dem Boden ruhen.
